# EUROPÄISCHE PATENTSCHRIFT

(11) **EP 2 065 145 B1**
(45) Veröffentlichungstag und Bekanntmachung des Hinweises auf die Patenterteilung: **05.01.2011**
(21) Anmeldenummer: 08020609.7
(22) Anmeldetag: 27.11.2008
(51) Int. Cl.: B26D 1/00, B26D 3/18

(54) **Verwendung einer Vorrichtung zum Raspeln von Käse**
Use of a device for grating cheese
Usage d'un dispositif pour râper le fromage

(30) Priorität: 29.11.2007 DE 202007016795 U
(43) Veröffentlichungstag der Anmeldung: 03.06.2009
(73) Patentinhaber: holac Maschinenbau GmbH, 89520 Heidenheim (DE)
(72) Erfinder: Holz, Achim, 89520 Heidenheim (DE)
(74) Vertreter: Lorenz, Werner

(56) Entgegenhaltungen:
- CH-A- 243 295
- CH-A- 246 935
- DE-A1- 4 333 096
- DE-U1- 9 105 840
- US-A- 2 120 375
- US-A- 2 303 595

## Beschreibung

Die Erfindung betrifft die Verwendung zum Raspeln und Schneiden von Käse mit einer Streifen- oder Würfelschneidemaschine, die einen in einem Gehäuse angeordneten Magazinschacht aufweist, in dem eine Vorschubeinheit das zu behandelnde Gut in Richtung auf eine vordere Ausgabeöffnung und eine in dem Gehäuse angeordnete Gattermessereinrichtung transportiert, wobei die Gattermessereinrichtung austauschbar gestaltet ist und wobei vor der Ausgabeöffnung ein Abschneidemesser angeordnet ist.

Eine Vorrichtung dieser Art ist aus der DE 43 33 096 C2 bekannt. Mit einer Streifen- oder Würfelschneidemaschine dieser Art werden Lebensmittel, insbesondere Fleisch, Wurst, Speck und dergleichen in rechteckförmige Streifen oder in Würfel geschnitten. Damit diese Vorrichtung auch zum Raspeln von Käse verwendbar ist, kann die Gattermessereinrichtung durch einen Führungsblock ersetzt werden und das Abschneidemesser wird durch eine Raspelscheibe ersetzt. Durch diese Maßnahme ist es möglich, dass mit ein und derselben Vorrichtung sowohl Würfel als auch Raspelprodukte aus Käse hergestellt werden können.

Nachteilig dabei ist jedoch, dass für den Wechsel von Schneiden zu Raspeln ein nicht unbeträchtlicher Umbau der Vorrichtung mit einem entsprechenden Zeitaufwand erforderlich ist.

Nachteilig ist weiterhin, dass beim Raspeln, insbesondere von Hartkäse, relativ viele Kleinteile und unterschiedliche Längen beim Raspeln entstehen. Dies bedeutet, dass zum Einen die geraspelten, zumeist in einer durchsichtigen Verkaufseinheit vorliegenden Raspelprodukte keine besonders schöne optische Form aufweisen und zum Anderen durch die anfallenden und sich im unteren Bereich ablagernden Käsekleinteile auch die Haltbarkeit beeinträchtigt wird.

Ein weiterer Nachteil besteht darin, dass sich bei einem Schneiden eines runden Käselaibes der Endbereich relativ schlecht raspeln lässt.

Der vorliegenden Erfindung liegt daher die Aufgabe zugrunde, eine Vorrichtung der eingangs erwähnten Art derart zu verbessern, dass zum Einen der Arbeitsaufwand für einen Umbau der Vorrichtung von einem Schneiden zu einem Raspeln einfacher wird und zum Anderen auch das geraspelte Produkt optisch ansprechender und besser verwendbar ist.

Erfindungsgemäß wird diese Aufgabe gemäß Auspruch 1 dadurch gelöst, dass die Gattermessereinrichtung eine Vielzahl von Durchtrittsöffnungen in jeweils wenigstens annähernd Rechteckform für den zu raspelnden Käse aufweist, wobei jeweils das Verhältnis von Länge zu Breite der Rechteckform einer jeden Durchtrittsöffnung mindestens 8:1 beträgt. Vorzugsweise beträgt das Verhältnis gleich oder größer 10:1.

Erfindungsgemäß wird nunmehr für ein Raspeln von Käse keine Raspelscheibe mehr verwendet, sondern es ist lediglich erforderlich anstelle der Gattermessereinrichtung, die zum Schneiden von Lebensmitteln in Würfelform verwendet wird, eine Gattermessereinrichtung einzusetzen mit der erfindungsgemäßen besonderen Ausgestaltung bezüglich ihrer Längen und Breiten der Durchtrittsöffnungen.

Bei einer entsprechenden Koordinierung von Vorschub und Betätigung des Abschneidemessers, das im Allgemeinen ein rotierendes Quermesser ist, mit einer Rotationsachse parallel zum Vorschub des zu schneidenden Käses, lassen sich sehr dünne Streifen von geraspeltem Käse herstellen. Bei vorteilhaften Längen der Durchtrittsöffnungen von 40 bis 80 mm, vorzugsweise 45 bis 60 mm, insbesondere circa 50 mm, und Breiten von 3 bis 6 mm, vorzugsweise 3,5 bis 5 mm, insbesondere 4 mm, ergeben sich Raspelprodukte, die in ihrer Form Nudeln, zum Beispiel Tagliatelle, ähneln.

Neben einem deutlich einfacheren Umbau der Vorrichtung, die erfindungsgemäß verwendt wird, da lediglich die Gattermessereinrichtung ausgetauscht werden muss, ergibt sich auf diese Weise eine optische ansprechende äußere Ausgestaltung durch die regelmäßigen Streifen. Darüber hinaus wird die Regelmäßigkeit auch dadurch verbessert, dass der zu schneidende Käseblock durch die Vorschubeinheit, zum Beispiel einen Hydraulikkolben einerseits und die Gattermessereinrichtung andererseits, einem entsprechenden Druck und Gegendruck ausgesetzt ist, wodurch auch Endstücke eines Käselaibes noch sehr gleichmäßig geraspelt bzw. geschnitten werden können und zwar ohne dass größere Mengen von Bruchstücken auftreten.

Eine sehr vorteilhafte Ausgestaltung der Gattermessereinrichtung, die erfindungsgemäß verwendet wird, kann darin bestehen, dass bei mehreren nebeneinander liegenden Reihen von Durchtrittsöffnungen einzelne Reihen oder auch nur einzelne Durchtrittsöffnungen vorgesehen sind, die unterschiedliche Längen aufweisen. Auf diese Weise lässt sich das optische Aussehen der Raspelprodukte nochmals verbessern.

Hierzu kann vorgesehen sein, dass die Gattermessereinrichtung durch einen Mittelsteg in zwei Hälften aufgeteilt ist, wobei zum Beispiel in einer Hälfte jeweils zwei Reihen vorgesehen sind und auf einer Hälfte die beiden Reihen von Durchtrittsöffnungen unterschiedliche Längen aufweisen können.

Über den Mittelsteg kann auch eine lösbare Verbindung mit einem Halterahmen für die Gattermessereinrichtung vorgesehen sein, wodurch ein entsprechend schneller und einfacher Austausch der Gattermessereinrichtung ermöglicht wird.

Das resultierende Raspelprodukt kann auf die verschiedenste Weise verwendet werden. Eine Möglichkeit besteht als Auflage für Pizzas. Eine weitere Möglichkeit besteht in der Verwendung bei einem Schweizer Wurstsalat zusammen mit geschnittenen Wurststreifen.

Vorteilhafte weitere Aüsgestaltungen und Weiterbildungen der Erfindung ergeben sich aus den übrigen Unteransprüchen und aus dem nachfolgend anhand der Zeichnung beschriebenen Ausführungsbeispiel.

Es zeigt:
- Fig. 1: eine Prinzipdarstellung einer Vorrichtung, wie erfindungsgemäß verwendet, in einer Ansicht von vorne (von der Ausgabeseite des geraspelten Käsepro- dukts aus gesehen);
- Fig. 2: eine Draufsicht auf die Schneidemaschine nach der Fig. 1 (teilweise dargestellt);
- Fig. 3: eine Vorderansicht der Gat- tereinrichtung, wie erfindungsgemäß verwendet;
- Fig. 4: einen Schnitt nach der Linie IV-IV der Fig. 3; und
- Fig. 5: einen Schnitt nach der Linie V-V der Fig. 3.

Vorrichtungen zum Schneiden von Lebensmitteln in Streifen- oder Würfelform sind allgemein bekannt, wozu neben der bereits eingangs erwähnten DE 43 33 096 C2 auch auf das Gebrauchsmuster DE 91 05 840 verwiesen wird. Aus diesem Grunde wird nachfolgend nur auf die für die Erfindung wesentlichen Teile näher eingegangen.

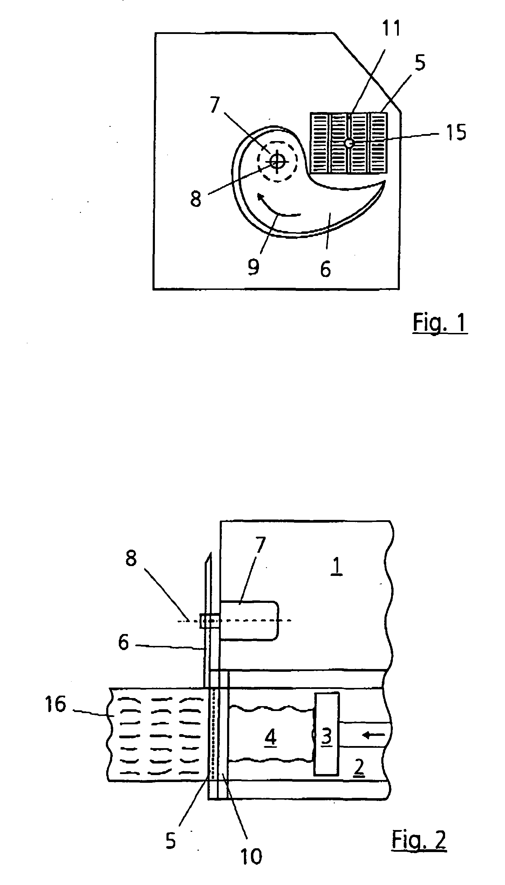

Die grundsätzlich als Würfelschneidemaschine ausgebildete Vorrichtung weist einen in einem Gehäuse 1 angeordneten Magazinschacht 2 auf. In dem Magazinschacht 2 befindet sich eine Vorschubeinheit in Form eines Vorschubkolbens 3, der ein zu schneidendes Gut, in diesem Fall einen Käseblock 4 in Pfeilrichtung einer Gattermessereinrichtung 5 zuführt. In Vorschubrichtung vor der Gattermessereinrichtung 5 ist ein Abschneidemesser 6 angeordnet. Wie aus den Figuren 1 und 2 ersichtlich ist, ist das Abschneidemesser 6 als Quermesser ausgebildet, das durch eine Antriebseinrichtung 7 um eine Rotationsachse 8, die parallel zur Vorschubrichtung des zu schneidenden Käseblocks 4 liegt, in Pfeilrichtung 9 rotiert.

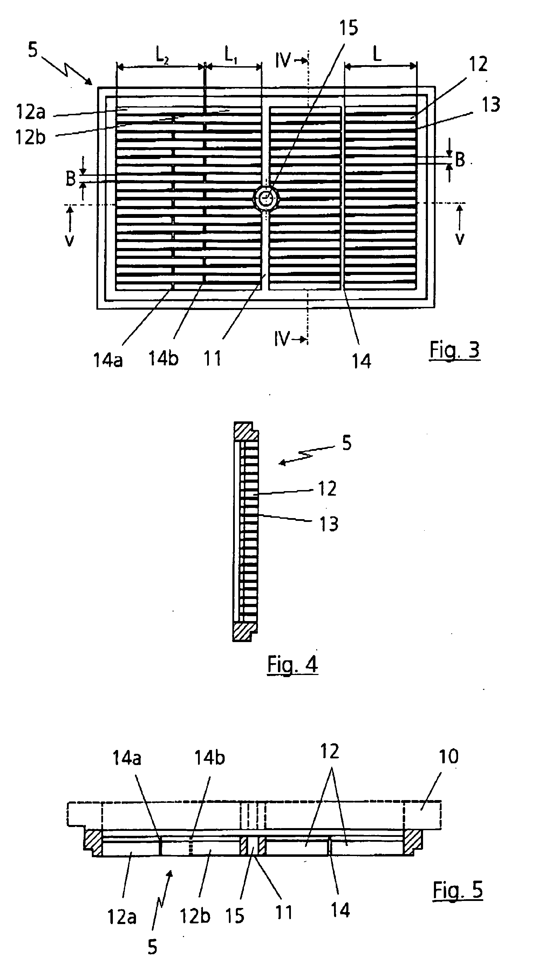

Durch die nachfolgend noch näher beschriebene Gattermessereinrichtung 5 hindurch getretenes Käsegut fällt als Raspelprodukt auf ein Transportband 16 zum Abtransport. Die Gattermessereinrichtung 5 ist in einem Halterahmen 10 austauschbar angeordnet. Auf diese Weise kann mit der Würfelschneidemaschine anstelle von Fleisch, Wurst und Speck, welche in Würfel oder in Längsstreifen geschnitten werden, im Bedarfsfall durch einen Austausch der für die Würfelschneidemaschine vorgesehenen Gattermessereinrichtung gegen die in den Figuren 3 bis 5 näher dargestellte Gattermessereinrichtung auch Käse geraspelt bzw. geschnitten werden.

Wie aus den Figuren 3 bis 5 ersichtlich ist, weist die Gattermessereinrichtung einen Mittelsteg 11 auf, der die Gattermessereinrichtung in zwei Hälften aufteilt. In jeder Hälfte sind nebeneinander liegend zwei Reihen von Durchtrittsöffnungen 12 in einer lang gestreckten Rechteckform angeordnet. Die Gatterform für das Schneiden des Käses wird durch eine Vielzahl von feststehenden Messern 13 erreicht. Durch senkrecht zu den Messern 13 angeordnete Trennmesser 14 werden die Durchtrittsöffnungen gebildet. Wie aus der rechten Hälfte der Fig. 3 ersichtlich ist, verläuft das Trennmesser 14 parallel zu dem Mittelsteg 11 und trennt die Hälfte in zwei gleich große Teile auf, wodurch zwei Reihen von Durchtrittsöffnungen 12 mit den gleichen Maßen gebildet werden.

Die linke Hälfte der Gattermessereinrichtung 5 gemäß Fig. 3 ist mit Trennmessern 14a und 14b so aufgeteilt, dass im Unterschied zu den gleichen Längen L der rechten Hälfte sich unterschiedliche Längen L1 und L2 ergeben. Die Trennmesser 14a und 14b sind hierzu entsprechend jeweils versetzt in den auf diese Weise gebildeten Reihen angeordnet. Die jeweiligen Breiten B der Durchtrittsöffnungen sind für beide Hälften gleich groß eingezeichnet. Selbstverständlich sind jedoch hier auch unterschiedliche Breiten möglich.

Anstelle einer Gattermessereinrichtung mit zwei durch einen Mittelsteg 11 voneinander getrennten Hälften, die jeweils aus zwei Teilen mit Trennmessern 14 bestehen, ist es selbstverständlich auch möglich, eine kleinere Gattermessereinrichtung zu verwenden, die insgesamt nur aus zwei Hälften ohne Mittelsteg und nur mit einem Trennmesser 14 dazwischen besteht.

Die durch den Vorschubkolben 3 durch die Durchtrittsöffnungen 12 durchgedrückten Käseteile werden durch das vor der Gattermessereinrichtung 5 rotierende Quermesser 6 quer zur Vorschubrichtung abgetrennt. Um die gewünschten Raspelprodukte zu erhalten, ist es dabei lediglich erforderlich, den Vorschub des Vorschubkolbens 3 mit der Rotationsgeschwindigkeit des Abschneidemessers 6 und dessen Abstand von der Gattermessereinrichtung 5 derart zu koordinieren, dass sich dünne Scheiben ergeben, die zum Beispiel Dicken von 0,5 bis 2 mm in Abhängigkeit von dem vorgesehenen Verwendungszweck betragen können.

Gleiches gilt für die Längen L bzw. L1 und L2 und die Breiten B.

Vorteilhafte Werte haben sich in der Praxis zwischen 40 und 80 mm, vorzugsweise 40 bis 60 mm und dabei insbesondere 50 mm, für die Längen der Durchtrittsöffnungen ergeben.

Im Falle der Herstellung von unterschiedlich langen Raspelprodukten gemäß den unterschiedlichen Längen L1 und L2 der rechten Hälfte können zum Beispiel für L1 40 mm und für L2 60 mm vorgesehen sein.

Als vorteilhafte Breiten B haben sich Breiten von 3 bis 6 mm, vorzugsweise 3,5 bis 5 mm, in der Praxis herausgestellt.

Zur Änderung oder Anpassung an eine gewünschte Dicke des Raspelprodukts sollte die Geschwindigkeit der Vorschubeinheit einstellbar sein. Vorteilhafte Dicken liegen zwischen 0,5 bis 3 mm.

Die Halteeinrichtung 5 kann auf beliebige Weise in dem Gehäuse 1 vor dem vorderen Ende des Magazinschachtes 2 angeordnet sein. Wesentlich ist lediglich, dass eine einfache und schnelle Austauschbarkeit vorliegen sollte. Dies kann beispielsweise, wie aus den Figuren 3 und 5 ersichtlich, durch eine lösbare Verbindungseinrichtung erfolgen, welche in dem Mittelsteg 11 angeordnet ist. Hierzu kann der Mittelsteg 11 entsprechend mit einer zentralen Öffnung 15 versehen sein, über die eine Schraubverbindung mit dem in der Fig. 5 nicht näher und nur gestrichelt dargestellten Halterahmen 16 erfolgt. Der Halterahmen 16 stützt sich dabei in dem Gehäuse 1 ab.

## Patentansprüche

1. Verwendung einer Streifen- oder Würfelschneidemaschine, die einen in einem Gehäuse angeordneten Magazinschacht aufweist, in dem eine Vorschubeinheit das zu behandelnde Gut in Richtung auf eine vordere Ausgabeöffnung und eine in dem Gehäuse angeordnete Gattermessereinrichtung transportiert, wobei die Gattermessereinrichtung austauschbar gestaltet ist und wobei vor der Ausgabeöffnung ein Abschneidemesser angeordnet ist, zum Raspeln und Schneiden von Käse, wobei die Gattermessereinrichtung (5) eine Vielzahl von Durchtrittsöffnungen (12) in jeweils wenigstens annähernd Rechteckform für den zu raspelnden Käse (4) aufweist, wobei jeweils das Verhältnis von Länge zu Breite der Rechteckform einer jeden Durchtrittsöffnung (12) mindestens 8:1 beträgt.

2. Verwendung nach Anspruch 1,
**dadurch gekennzeichnet, dass** das Verhältnis wenigstens gleich oder größer 10:1 beträgt.

3. Verwendung nach Anspruch 1 oder 2,
**dadurch gekennzeichnet, dass** die Länge jeder Durchtrittsöffnung (12) zwischen 40 und 80 mm beträgt.

4. Verwendung nach Anspruch 3,
**dadurch gekennzeichnet, dass** die Länge jeder Durchtrittsöffnung (12) zwischen 45 und 60 mm, vorzugsweise 50 mm, beträgt.

5. Verwendung nach einem der Ansprüche 1 bis 4,
**dadurch gekennzeichnet, dass** die Breite jeder Durchtrittsöffnung (12) zwischen 3 und 6 mm beträgt.

6. Verwendung nach Anspruch 5,
**dadurch gekennzeichnet, dass** die Breite jeder Durchtrittsöffnung (12) zwischen 3,5 und 5 mm, vorzugsweise 4 mm, beträgt.

7. Verwendung nach einem der Ansprüche 1 bis 6,
**dadurch gekennzeichnet, dass** die Gattermessereinrichtung (5) durch einen Mittelsteg (11) oder ein Trennmesser (14) in wenigtens zwei Hälften aufgeteilt ist.

8. Verwendung nach einem der Ansprüche 1 bis 7,
**dadurch gekennzeichnet, dass** die Vorschubeinheit derart steuerbar ist, dass die Dicken des Raspelproduktes zwischen 0.5 bis 3 mm liegen.

9. Verwendung nach einem der Ansprüche 1 bis 8,
**dadurch gekennzeichnet, dass** in der Gattermessereinrichtung (5) wenigstens zwei, vorzugsweise vier Reihen von Durchtrittsöffnungen (12) nebeneinander angeordnet sind.

10. Verwendung nach Anspruch 8,
**dadurch gekennzeichnet, dass** in jeder Hälfte der durch den Mittelsteg (11) geteilten Gattermessereinrichtung (5) je zwei Reihen von Durchtrittsöffnungen (12) angeordnet sind.

11. Verwendung nach einem der Ansprüche 1 bis 10,
**dadurch gekennzeichnet, dass** in der Gattermessereinrichtung (5) Durchtrittsöffnungen (12a,12b) mit unterschiedlichen Längen und/oder Breiten vorgesehen sind.

12. Verwendung nach Anspruch 11,
**dadurch gekennzeichnet, dass** auf wenigstens einer Hälfte der durch den Mittelsteg (11) geteilten Gattermessereinrichtung (5) zwei nebeneinander liegende Reihen von Durchtrittsöffnungen (12a,12b) mit unterschiedlichen Längen angeordnet sind.

13. Verwendung nach Anspruch 12,
**dadurch gekennzeichnet, dass** eine Reihe von Durchtrittsöffnungen (12b) eine Länge von wenigstens annähernd 40 mm und die andere Reihe von Durchtrittsöffnungen (12a) eine Länge von wenigstens annähernd 60 mm aufweist.

14. Verwendung nach einem der Ansprüche 1 bis 13,
**dadurch gekennzeichnet, dass** die Gattermessereinrichtung (5) an einem Halterahmen (10) vorzugsweise über den Mittelsteg (11) befestigt ist.

15. Verwendung nach Anspruch 14,
**dadurch gekennzeichnet, dass** die Gattermessereinrichtung (5) über den Mittelsteg (11) durch lösbare Verbindungsglieder vorzugsweise durch eine Schraubverbindung verbunden ist.

## Claims

1. Use of a strip-cutting or cube-cutting machine which has a magazine shaft which is arranged in a housing and in which a feed unit transports the material to be treated in the direction of a front delivery aperture and of a grid-type knife apparatus arranged in the housing, wherein the grid-type knife apparatus is of interchangeable design and wherein a cutting-off knife is arranged in front of the delivery aperture, for the purpose of grating and cutting cheese, wherein the grid-type knife apparatus (5) has a large number of pass-through apertures (12) of, in each case, at least approximately rectangular shape for the cheese (4) to be grated, wherein, in each case, the ratio of the length to the width of the rectangular shape of each pass-through aperture (12) is at least 8:1.

2. Use according to claim 1,
**characterised in that**
the ratio is at least equal to, or greater than, 10:1.

3. Use according to claim 1 or 2,
**characterised in that**
the length of each pass-through aperture (12) is between 40 and 80 mm.

4. Use according to claim 3,
**characterised in that**
the length of each pass-through aperture (12) is between 45 and 60 mm, and preferably 50 mm.

5. Use according to one of claims 1 to 4,
**characterised in that**
the width of each pass-through aperture (12) is between 3 and 6 mm.

6. Use according to claim 5,
**characterised in that**
the width of each pass-through aperture (12) is between 3.5 and 5 mm, and preferably 4 mm.

7. Use according to one of claims 1 to 6,
**characterised in that**
the grid-type knife apparatus (5) is divided up into at least two halves by a central web (11) or a separating knife (14).

8. Use according to one of claims 1 to 7,
**characterised in that**
the feed unit can be controlled in such a way that the thicknesses of the grated product lie between 0.5 and 3 mm.

9. Use according to one of claims 1 to 8,
**characterised in that**
at least two, and preferably four, rows of pass-through apertures (12) are arranged side by side in the grid-type knife apparatus (5).

10. Use according to claim 8,
**characterised in that**
two rows at a time of pass-through apertures (12) are arranged in each half of the grid-type knife apparatus (5) which is divided by the central web (11).

11. Use according to one of claims 1 to 10,
**characterised in that**
pass-through apertures (12a, 12b) having different lengths and/or widths are provided in the grid-type knife apparatus (5).

12. Use according to claim 11,
**characterised in that**
two rows of pass-through apertures (12a, 12b) having different lengths, which rows lie side by side, are arranged over at least one half of the grid-type knife apparatus (5) which is divided by the central web (11).

13. Use according to claim 12,
**characterised in that**
one row of pass-through apertures (12b) has a length of at least approximately 40 mm and the other row of pass-through apertures (12a) has a length of at least approximately 60 mm.

14. Use according to one of claims 1 to 13,
**characterised in that**
the grid-type knife apparatus (5) is fastened to a holding frame (10), preferably via the central web (11) .

15. Use according to claim 14,
**characterised in that**
the grid-type knife apparatus (5) is connected via the central web (11) by detachable connecting members, preferably by means of a screw connection.

## Revendications

1. Utilisation d'une machine de découpage en bandes ou en dés qui comporte un puits magasin disposé dans un carter, dans lequel une unité d'avance entraîne le produit à traiter en direction d'une ouverture de sortie avant et d'un dispositif formé d'une grille de lames disposé dans le carter, dans lequel le dispositif formé d'une grille de lames est interchangeable et dans lequel une lame de coupe est disposée en avant de l'ouverture de sortie pour racler et découper du fromage, dans lequel le dispositif formé d'une grille de lames (5) comporte une pluralité d'ouvertures de passage (12) ayant chacune une forme au moins approximativement rectangulaire pour le fromage (4) qu'il s'agit de râper, et dans lequel le rapport de la longueur à la largeur de la forme rectangulaire de chaque ouverture de passage (12) est d'au moins 8:1.

2. Utilisation selon la revendication 1,
**caractérisée en ce que**
le rapport est au moins égal ou supérieur à 10:1.

3. Utilisation selon la revendication 1 ou 2,
**caractérisée en ce que**
la longueur de chaque ouverture de passage (12) est comprise entre 40 et 80 mm.

4. Utilisation selon la revendication 3,
**caractérisée en ce que**
la longueur de chaque ouverture de passage (12) est comprise entre 45 et 60 mm, et de préférence égale à 50 mm.

5. Utilisation selon l'une des revendications 1 à 4,
**caractérisée en ce que**
la largeur de chaque ouverture de passage (12) est comprise entre 3 et 6 mm.

6. Utilisation selon la revendication 5,
**caractérisée en ce que**
la largeur de chaque ouverture de passage (12) est comprise entre 3,5 et 5 mm, et de préférence égale à 4 mm.

7. Utilisation selon l'une des revendications 1 à 6,
**caractérisée en ce que**
le dispositif formé d'une grille de lames (5) est subdivisé en au moins deux moitiés par une entretoise centrale (11) ou par une larme séparatrice (14).

8. Utilisation selon l'une des revendications 1 à 7,
**caractérisée en ce que**
l'unité d'avance peut être commandée de manière que les épaisseurs du produit râpé soient comprises entre 0,5 et 3 mm.

9. Utilisation selon l'une des revendications 1 à 8,
**caractérisée en ce que**
au moins deux, de préférence quatre, rangées d'ouvertures de passage (12) sont disposées les unes à côté des autres dans le dispositif formé d'une grille de lames (5)

10. Utilisation selon la revendication 8,
**caractérisée en ce que**
au moins deux rangées d'ouvertures de passage (12) sont disposées dans chaque moitié du dispositif formé d'une grille de lames (5) qui est subdivisé par l'entretoise centrale (11).

11. Utilisation selon l'une des revendications 1 à 10,
**caractérisée en ce que**
des ouvertures de passage (12a, 12b) ayant des longueurs et/ou des largeurs différentes sont prévues dans le dispositif formé d'une grille de lames (5).

12. Utilisation selon la revendication 11,
**caractérisée en ce que**
deux rangées d'ouvertures de passage (12a, 12b), disposées l'une à côté de l'autre et ayant des longueurs différentes, sont disposées sur au moins une moitié du dispositif à lames de grille (5) divisé par l'entretoise centrale (11).

13. Utilisation selon la revendication 12,
**caractérisée en ce que**
une rangée d'ouvertures de passage (12b) a une longueur d'au moins environ 40 mm et l'autre rangée d'ouvertures de passage (12a) une longueur d'au moins environ 60 mm.

14. Utilisation selon l'une des revendications 1 à 13,
**caractérisée en ce que**
le dispositif formé d'une grille de lames (5) est fixé à un châssis support (10), de préférence par l'intermédiaire de l'entretoise centrale (11).

15. Utilisation selon la revendication 14,
**caractérisée en ce que**
le dispositif formé d'une grille de lames (5) est fixé par l'intermédiaire de l'entretoise centrale (11) par des éléments d'assemblage démontables, de préférence par un assemblage boulonné.
